# EUROPÄISCHE PATENTANMELDUNG

(11) **EP 0 543 085 A1**
(43) Veröffentlichungstag der Anmeldung: **26.05.1993**
(21) Anmeldenummer: 92112173.7
(22) Anmeldetag: 16.07.1992
(51) Int. Cl.: B29C 45/00, B29C 69/00, B29C 43/18

(54) **Verfahren und Vorrichtung zum Herstellen laminierter Formteile**

(30) Priorität: 21.11.1991 DE 4138337
(71) Anmelder: Krauss-Maffei Aktiengesellschaft, D-80997 München (DE)
(72) Erfinder: Bürkle, Erwin, Dr. Dipl.-Ing., W-8177 Bichl (DE); Spötzl, Markus, Dipl.-Ing. (FH), W-8000 München 71 (DE); Rehm, Guido, Dipl.-Ing. (FH), W-8000 München 70 (DE); Zweig, Konrad, Dipl.-Wirtsching., W-8900 Augsburg (DE)

(57) **Zusammenfassung**

Laminierte Formteile mit einer Grundschicht aus thermoplastischem Material und einer oder mehreren Deckschichten werden dadurch hergestellt, daß Zuerst in einer Spritzgießform (5, 9) ein Formling (13) aus thermoplastischem Material spitzgegossen wird, und anschließend die untere Formhälfte (5) der Spritzgießform mit dem darin befindlichen, noch nicht erstarrten Formling (13) unter eine obere Preßform (7) einer Preßvorrichtung gebracht wird, durch die die Deckschicht (19) gegen die Oberseite des noch nicht erstarrten Formlings (13) angepreßt und an diesen laminiert wird, wobei der Formling unter überwiegend radialem Materialfluß in die Randbereiche der Preßformkontur hinein verformt wird. Während des Spritzgießens des Formlings kann die Deckschicht durch Tiefziehen in der oberen Preßform dreidimensional vorgeformt werden.

## Beschreibung

Die Erfindung betrifft ein Verfahren zum Herstellen laminierter Formteile, die aus einer Grundschicht aus thermoplastischem Material und mindestens einer Deckschicht aus vorgefertigtem flächigen Deckschichtmaterial bestehen, mittels einer eine untere und obere Preßform aufweisenden Presse, wobei in einem ersten Schritt das plastifizierte thermoplastische Material in die untere Preßform eingebracht wird und dann in einem zweiten Schritt die untere und obere Preßform zusammen mit dem dazwischen eingebrachten Deckschichtmaterial gegeneinander gepreßt das thermoplastische Material zur Grundschicht geformt und mit der Deckschicht verbunden wird.

Ein Verfahren dieser Art ist aus US-PS 4 873 045 bekannt. Das Verfahren, auf das sich die Erfindung bezieht, ist vorzugsweise, jedoch nicht ausschließlich zur Herstellung von Innenausrüstungen für Kraftfahrzeuge vorgesehen, z.B. zur Herstellung von inneren Türverkleidungen, Armaturenverkleidungen u.dgl.. Die Grundschicht, die dem Formteil die gewünschte stabile dreidimensionale Form gibt, besteht aus einem in der gewünschten dreidimensionalen Form erstarrten thermoplastischen Material; die Deckschicht kann aus einem beliebigen vorgefertigten flexiblen Material, z.B. Gewebe, Leder, Kunstleder, d.h. Kunststoffmaterial mit Lederprägung, Schaumstoffolie oder dgl. bestehen. Besonders vorteilhaft ist ein Aufbau mit einer oberen Deckschicht aus Kunststoffolie z.B. mit lederartiger Oberflächennarbung und einer unteren Deckschicht oder Polsterungsschicht aus einem nachgiebigen Material wie Schaumstoff. Durch das Verpressen mit dem noch nicht erstarrten, d.h. zumindest an der Oberfläche noch fließfähigen oder thermoplastischem Material der Grundschicht, werden die Deckschicht oder die Deckschichten unlösbar mit der Grundschicht verbunden.

Bei dem bekannten Verfahren gemäß US-PS 4 873 045 erfolgt das Einbringen der Grundschicht in die untere Preßform durch Extrudieren, wobei eine an einen Extruder angeschlossene Schlitzdüse über die untere Preßform verfahren und eine der gewünschten Schichtdicke entsprechende Lage des thermoplastischen Materials auf der unteren Preßform abgelegt wird. Diese extrudierte Schicht folgt aufgrund ihrer Plastizität und der Einwirkung der Schwerkraft nur relativ grob der Formkontur der unteren Preßform. Beim nachfolgenden zweiten Schritt, bei dem die obere Preßform zusammen mit der Deckschicht gegen die untere Preßform angepreßt wird, wird die extrudierte, noch nicht erstarrte Grundschicht vollständig gegen die Kontur der unteren Preßform gepreßt. Bei diesem bekannten Verfahren ist es nachteilig, daß die mit gleichförmiger Dicke extrudierte Lage aus thermoplastischen Material in keiner Weise an die örtliche Materialverteilung in der fertiggepreßten Grundschicht angepaßt ist, was zur Folge hat, daß es beim Verpressen der Grundschicht mit der Deckschicht zu einem unkontrollierten örtlichen Fließverhalten des thermoplastischen Materials kommt, welches zu einem Verziehen und zur Faltenbildung des Deckschichtmaterials führen kann. Falls die Formkontur der unteren Preßform sehr große Erhöhungen oder Vertiefungen aufweist, kann durch die genannten Fließvorgänge auch eine ungenügende Schichtdicke der Grundschicht verursacht werden. Auch ist durch das Extrudierverfahren nicht sichergestellt, daß das gesamte Volumen des in der unteren Formhälfte abgelegten thermoplastischen Materials dem Volumen der Grundschicht des herzustellenden Formteils genau entspricht.

In der nicht vorveröffentlichten Patentanmeldung P 41 011 06.6 ist bereits vorgeschlagen worden, den ersten Schritt des Verfahrens als Spritzgießvorgang durchzuführen, wobei die untere Preßform mit einem Formoberteil zusammengebracht wird und mit diesem eine Spritzgießform bildet, deren Formhohlraum exakt der Formgebung der herzustellenden Grundschicht entspricht. Damit kann zwar eine hohe Formtreue bei der Herstellung der Grundschicht erzielt werden. Es ist aber nach wie vor möglich, daß beim Verpressen der durch Spritzgießen geformten Grundschicht mit der Deckschicht unkontrollierte lokale Fließvorgänge zu einem Verziehen und zur Faltenbildung der Deckschicht führen.

Der Erfindung liegt die Aufgabe zugrunde, ein Verfahren der eingangs genannten Art, und eine Vorrichtung zu seiner Durchführung so auszubilden, daß einerseits eine exakt formgetreue Ausbildung der Grundschicht, auch bei einer Formkontur mit starken Höhenunterschieden und örtlichen Materialanhäufungen, gewährleistet ist und andererseits das im zweiten Schritt beim Verpressen mit der Deckschicht auftretende Fließen des Grundschichtmaterials derart beeinflußbar ist, daß ein Verziehen und eine Faltenbildung des Deckschichtmaterials vermieden wird.

Zur Lösung dieser Aufgabe sieht die Erfindung ein Verfahren der eingangs genannten Art vor, welches dadurch gekennzeichnet ist, daß der erste Schritt als Spritzgießverfahren durchgeführt wird, bei dem die untere Preßform zusammen mit einem Formoberteil eine spritzgießform bildet, in deren Formhohlraum das thermoplastische Material eingespritzt wird, wobei durch das Spritzgießen ein Formling gebildet wird, der teilweise der Formkontur der unteren Preßform entspricht, aber insbesondere deren äußere Bereiche nicht vollständig ausfüllt, und daß danach die untere Preßform zusammen mit dem Formling von dem Formoberteil getrennt und für den zweiten Schritt mit der oberen Preßform zusammengebracht wird, und daß im zweiten Schritt der Formling beim Verpressen mit der Deckschicht unter Erzeugung eines Materialflusses in die Randbereiche der Formkontur zur vollständigen Grundschicht fertiggeformt wird.

Für die Erfindung wesentlich ist somit einerseits, daß ein und diesselbe Preßform in den beiden aufeinanderfolgenden Verfahrensschichten zwei verschiedene Funktionen übernimmt, nämlich einmal als Formunterteil einer geschlossenen Spritzgießform zu dienen und im zweiten Schritt die untere Formhälfte einer Laminierpresse zu bilden. Wesentlich ist ferner, daß der durch Spritzgießen hergestellte Formling nicht die gesamte Formkontur der unteren Preßform ausfüllt, sondern Randbereiche davon freiläßt, was zur Folge hat, daß beim anschließenden Verpressen mit der Deckschicht das Material der Grundschicht noch im wesentlichen radial nach außen in diese Randbereiche fließen muß. Ein solches, gleichmäßig nach außen gerichtetes Fließen des Materials ist günstig, um die Deckschicht glatt und faltenfrei zu halten. Örtliche Materialströmungen, die vom Rand nach innen gerichtet sind, und die eine Faltenbildung der Deckschicht verursachen können, treten dagegen nicht auf, da die für die Ausfüllung der Formkontur der unteren Preßfom in den inneren Bereichen erforderlichen Materialanhäufungen bereits durch das Spritzgießen zur Verfügung gestellt wurden. Durch das erfindungsgemäße Verfahren können somit auch Formteile mit sehr komplizierter dreidimensionaler Formgebung, großen Dickenunterschieden und großen Abmessungen mit hoher Formtreue und mit faltenfreier Deckschicht hergestellt werden.

Eine exakte volumetrische Dosierung der durch Spritzgießen eingebrachten Grundschichtmasse wird erzielt, wenn ein Formoberteil verwendet wird, das zusammen mit der unteren Preßform einen geschlossenen Formhohlraum definiert, der Randbereiche der Formkontur der unteren Preßform nicht umfaßt, wobei das thermoplastische Material in diesen Formhohlraum bis zu dessen vollständiger Ausfüllung eingespritzt wird. Besonders bevorzugt ist eine Ausführungsform der Erfindung, bei der ein Formoberteil verwendet wird, das eine von der zu bildenden Grundschicht abweichende Formkontur hat, die eine für den Materialfluß beim anschließenden Preßvorgang günstige Massenverteilung des Formlings vorgibt.

Das Abheben des Formoberteils vom Formling muß erfolgen, solange der Formling für daas nachfolgende Pressen noch hinreichend plastisch oder verformbar ist. Durch entsprechende Wahl von verfahrenstechnischen Maßnahmen wie z.B. Kühlzeit, Entfernungszeitpunkt, Temperatur u. dgl. kann erreicht werden, daß sich der Formling problemlos von dem Formoberteil abtrennt.

In weiterer Ausgestaltung der Erfindung können auch besondere zusätzliche Mittel angewendet werden, um ein vollständiges Ablösen des Formoberteils der Spritzgießform von der Oberseite des noch nicht vollständig erstarrten Formlings angewendet, um sicherzustellen, daß der Formling zur Gänze in der unteren Formhälfte verbleibt. Geeignete Mittel stehen dem Fachmann zur Verfügung, z.B. durch Anbringung eines geeigneten Trennmittels, wie Silikonöl od.dgl. auf die Oberfläche des Formoberteils, oder die Beschichtung des Formoberteils mit einem haftungsminderndem Material wie Teflon, Kohlenstoff od.dgl. Es kann auch das gesamte Formoberteil der Spritzgießform aus einem Material mit niedriger Oberflächenhaftung, wie z.B. speziell strukturiertem Kohlenstoff, hergestellt werden. Stattdessen oder zusätzlich können Maßnahmen an der unteren Formhälfte angewendet werden, um den spritzgegossenen, noch nicht erstarrten Formling beim öffnen der Spritzgießform an der unteren Formhälfte festzuhalten, z.B. in Form von Hinterschneidungen insbesondere im Bereich der Angüsse.

Die genaue Art der Durchführung des Spritzgießens beim ersten Verfahrensschritt hängt im einzelnen von der Formgebung und Größe des herzustellenden Formteils, und damit des zu spritzenden Formlings ab. Bei Formlingen relativ kleiner Abmessungen kann ein ganz gewöhnlicher Spritzgießvorgang über einen einzigen Angußkanal ohne besondere Vorkehrungen durchgeführt werden. Handelt es sich um einen Formling von großen Flächenabmessungen, aber sehr geringer Dicke, dann besteht die Gefahr, daß das an einem z.B. zentralen Anguß zugeführte Kunststoffmaterial, das sich im Formhohlraum verteilen muß, bereits erstarrt, bevor es die Randbereiche des Formhohlraums erreicht hat. In diesem Fall müssen besondere Maßnahmen angewandt werden, um das Material am vorzeitigen Erstarren im Formhohlraum zu hindern. Eine Möglichkeit besteht darin, das Material über einen oder mehrere beheizte Angußkanäle, sogenannte Hot-Runner, dem Formhohlraum zuzuführen. Eine andere Möglichkeit besteht darin, den Spritzgießvorgang als sogenanntes Spritzprägen durchzuführen. Dabei werden die beiden Formhälften des tauchkolbenartig ausgebildeten Formwerkzeugs zunächst auf einen größeren als den endgültigen Abstand eingestellt, so daß der Formling zunächst mit größerer als der endgültigen Wanddicke gespritzt wird. Anschließend werden die beiden Formhälften vollständig gegeneinander gepreßt, um den spritzgegossenen Formling auf die endgültige geringere Wanddicke fertigzuformen. Solche Verfahrensabläufe sind dem Fachmann bekannt und sollen erfindungsgemäß von dem Begriff "Spritzgießen" umfaßt sein.

Eine Vorrichtung zur Durchführung des erfindungsgemäßen Verfahrens umfaßt eine Preßvorrichtung mit unterer und oberer Preßform sowie Mittel zum Einbringen von thermoplastischem Kunststoff in die untere Preßform, zum Einbringen eines vorgefertigten Deckschichtmaterials in die obere oder untere Preßform oder dazwischen, und Mittel zum Zusammenpressen der Preßformen auf, und eine solche Vorrichtung ist erfindungsgemäß dadurch gekennzeichnet, daß die Vorrichtung ferner ein Formoberteil aufweist, das wahlweise mit der unteren Preßform zur Bildung einer Spritzgießform zusammenführbar ist,
daß die aus Formoberteil und unterer Preßform gebildete Spritzgießform an ein Spritzgießaggregat anschließbare Zuführkanäle zum Einspritzen von thermoplastischem Material in die Spritzgießform aufweist, und daß das Formoberteil eine Formkontur aufweist, die zusammen mit der unteren Preßform einen Formhohlraum definiert, der Randbereiche der Formkontur der unteren Preßform mindestens teilweise nicht umfaßt.

Weitere vorteilhafte Merkmale der Vorrichtung sind in den Ansprüchen 7 bis 13 angegeben.

Ausführungsformen der Erfindung werden im Folgenden anhand der Zeichnung näher erläutert. Es zeigt:
- Fig. 1 bis 3: schematisch vereinfachte Schnittdarstellungen einer erfindungsgemäßen Vorrichtung in drei verschiedenen Phasen des erfindungsgemäßen Verfahrens;
- Fig. 4 bis 6: ähnliche Schnittdarstellungen der Preß- und Spritzgießformen der Vorrichtung in geänderter Ausführungsform;
- Fig. 7: eine Seitenansicht einer weiteren Ausführungsform der erfindungsgemäßen Vorrichtung;
- Fig. 8 bis 12: vereinfachte Schnittdarstellungen einer weiteren Ausführungsform der Vorrichtung in verschiedenen Phasen des erfindungsgemäßen Verfahrens;
- Fig. 13: einen schematischen Schnitt durch die Vorrichtung in einer gegenüber Fig. 8 bis 13 um 90° gedrehten Schnittebene.

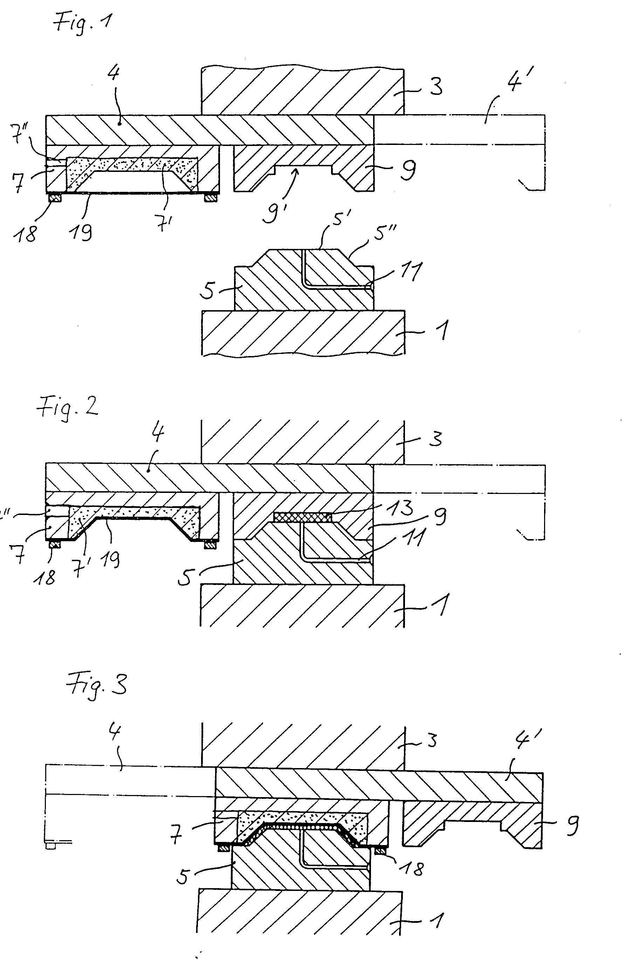

Fig. 1 zeigt die untere Preßplatte 1 und die obere Preßplatte 3 einer (im übrigen nicht dargestellten) Presse, die geeignete Führungen und Antriebseinrichtungen aufweist, um die obere Preßplatte 3 vertikal relativ zur unteren Preßplatte 1 zu bewegen und mit einer Preßkraft zu beaufschlagen. Die untere Preßplatte 1 trägt eine untere Preßform 5, in der ein oder mehrere Gießkanäle 11 ausgebildet sind, die an ein Spritzgießaggregat (nicht dargestellt) angeschlossen werden können. An der oberen Preßplatte 3 ist ein Schlitten 4 horizontal verschiebbar angeordnet, der an seiner Unterseite nebeneinander eine obere Preßform 7 und ein Formoberteil 9 befestigt sind. Der Schlitten 4 kann zwischen der in Fig. 1 ausgezogen dargestellten Position und der strichpunktiert angedeuteten Position 4' verschoben werden, so daß entweder das Formoberteil 9 oder die obere Preßform 7 sich vertikal über der unteren Preßform 5 befindet.

Ausgehend von der in Fig. 1 dargestellten Position wird an der oberen Preßform 7 das Deckschichtmaterial 19 fixiert, z.B. mittels eines Fixierrahmens 18. Das Deckschichtmaterial 19 kann z.B. eine vorgefertigte Folie mit dekorativer Oberflächenstruktur, ein Gewebe oder dgl. sein und kann z.B. als vorgefertigte Bahn von einer Rolle abgezogen werden. Anschließend werden die Preßbacken 1, 3 gegeneinander bewegt, so daß die Vorrichtung die in Fig. 2 dargestellte Position einnimmt. In dieser Position bilden die untere Preßform 5 und das Preßoberteil 9 zusammen eine Spritzgießform, in die über den Kanal 11 plastifiziertes thermoplastisches Material mittels eines (nicht dargestellten) üblichen Spritzgießaggregates eingespritzt wird, um einen Formling 13 zu bilden. Gleichzeitig mit dem Spritzgießen des Formlings 13 wird das an der oberen Preßform 7 befestigte Deckschichtmaterial 19 tiefgezogen. Zu diesem Zweck ist, wie schematisch angedeutet, ein die Formkontur begrenzender Bereich 7' der oberen Preßform 7 aus einem porösen Material, z.B. Sintermaterial oder mittels Kunststoff verklebtes Pulvermaterial, ausgebildet und durch einen oder mehrere Kanäle 7'' an eine Vakuumquelle anschließbar. Nach Beendigung der Spritzgieß- und Tiefziehvorgänge (Fig. 2) werden die Preßbacken 1, 3 wieder auseinanderbewegt, der Schlitten 4 wird nach rechts in die Stellung 4' verfahren, und die Preßbacken 1, 3 werden wieder gegeneinander bewegt, so daß die Stellung gemäß Fig. 3 erreicht wird. Hierbei wird der Formling 13 zur fertigen Grundschicht des herzustellenden Formkörpers entsprechend der Formkontur der Preßformen 5, 7 ausgeformt und gleichzeitig mit der Deckschicht 19 verpreßt und verbunden. Nach erneutem Öffnen der Preßformen 5, 7 kann der fertige laminierte Formkörper entnommen werden.

Wie aus Fig. 1 bis 3 hervorgeht, ist die Formvertiefung 9' des Formoberteils 9 so ausgebildet, daß sie zusammen mit der unteren Preßform 5 einen Formhohlraum für den Formling 13 bildet, der nicht die gesamte Fläche der Formkontur 5' der unteren Formhälfte umfaßt, sondern deren Randbereiche, z.B. die Randschrägen 5'', freiläßt. Andererseits ist die Dicke des durch Spritzgießen hergestellten Formlings 13 größer als die Dicke der endgültigen Grundschicht des herzustellenden Formkörpers. Beim Verpressen des Formlings 13 mit der Deckschicht (Fig. 3) wird der Formling 13 durch Pressen in die endgültige Form der Grundschicht gebracht, wobei ein Fließen des Materials im wesentlichen radial nach außen in die Randbereiche 5'' der von der unteren und oberen Preßform 5, 7 definierten Formkontur stattfindet. Dieses radiale Fließen ist günstig, da es einem Verziehen und einer Faltenbildung der Deckschicht 19 entgegenwirkt.

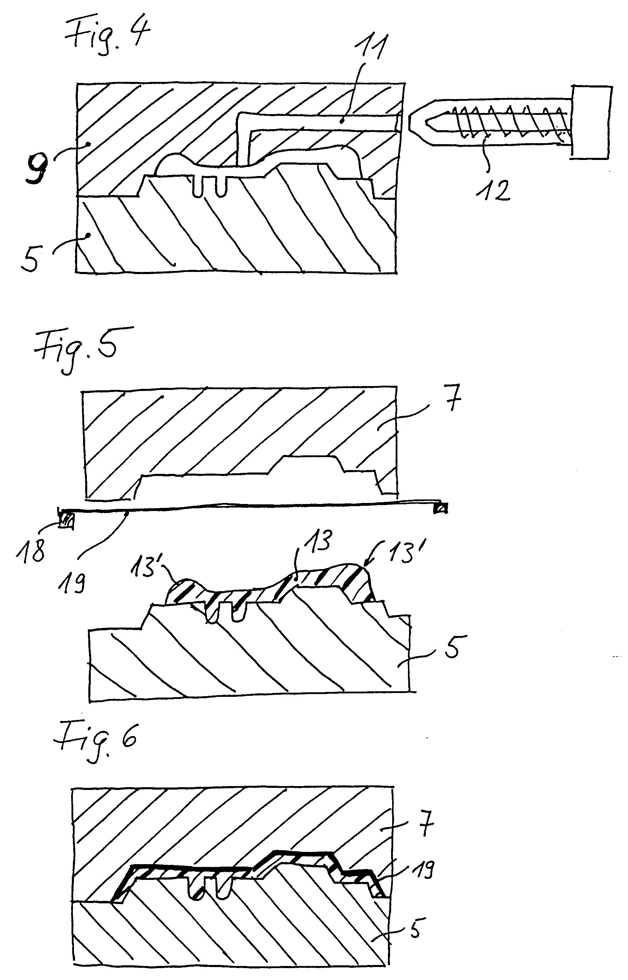

Fig. 4 bis 6 zeigen eine abgeänderte Ausführungsform der Vorrichtung nach Fig. 1 bis 3, bei der die untere Preßform 5 eine kompliziertere Formkontur z.B. mit örtlichen Vertiefungen zur Ausbildung von Verstärkungsrippen des herzustellenden Formteils aufweist. Das Formoberteil 9 hat eine Formvertiefung 9', die zusammen mit der unteren Preßform 5 einen Formhohlraum definiert, dessen Höhe örtlich unterschiedlich ist. Durch Spritzgießen mittels eines bei 12 angedeuteten Spritzgießaggregats und über Spritzgießkanäle 11, die z.B. auch im Formoberteil 9 ausgebildet sein können, entsteht ein Formling 13 (Fig. 5), der aufgrund örtlicher Dickenunterschiede Materialanhäufungen 13' aufweist, die gezielt so ausgebildet sind, daß sich ein möglichst günstiges Fließverhalten beim anschließenden Verpressen des Formlings 13 mit der Deckschicht 19 ergibt. Durch geeignete Formgebung des Formlings 13 läßt sich dieser problemlos auch zu einer relativ komplizierten Fertigform des her- zustellenden laminierten Formkörpers verpressen (Fig. 6), wobei aufgrund der exakten volumetrischen Bemessung des Formlings 13 und der in geeigneter Weise gestalteten Materialanhäufungen 13' ein gewünschtes Fließverhalten beim Fertigpressen und eine vollständige Ausfüllung der Form- kontur der Preßformen 5, 7 gewährleistet werden kann.

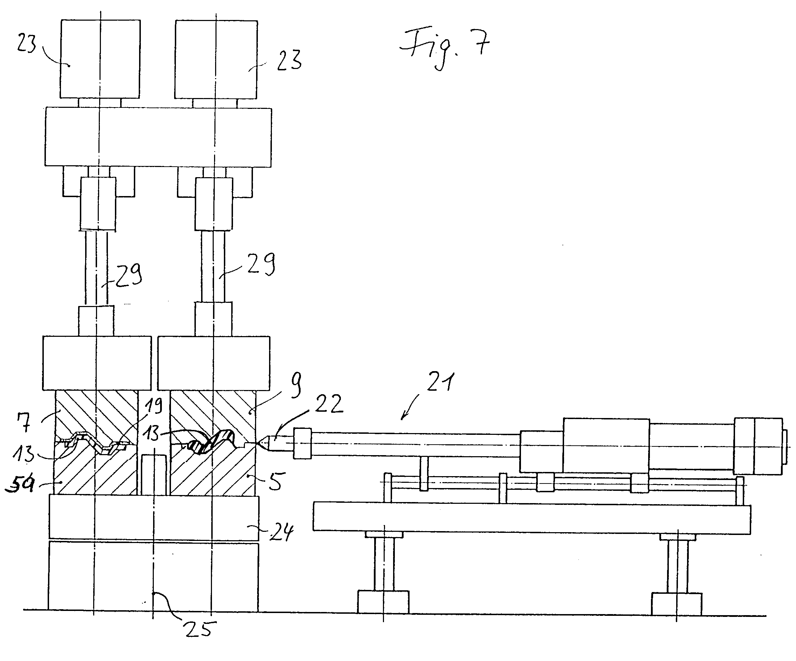

In Fig. 7 ist eine Spritzgießmaschine 21 dargestellt, die von üblicher Bauart ist und nicht näher erläutert wird. Der Spritzkopf 22 der Spritzgießmaschine 21 ist an ein Spritzgießwerkzeug anschließbar, das aus einer unteren Formhälfte 5 und einem heb- und senkbaren Formoberteil 9 besteht, das an Führungssäulen 29 geführt und mit einer Antriebsvorrichtung 23 heb- und senkbar ist. Im geschlossenen Zustand bilden die untere Formhälfte 5 und das Formoberteil 9 einen geschlossenen Formhohlraum, in den mittels des Spritzkopfes 22 thermoplastischer Kunststoff einspritzbar ist, um einen Formling 13 von gewünschter Formgebung herzustellen. Die Angußkanäle, durch die der thermoplastische Kunststoff aus dem Spritzkopf 22 in den Formhohlraum gelangt, sind in Fig. 1 nicht dargestellt, da die Anordnung solcher Angußkanäle dem Fachmann bekannt ist. Die Angußkanäle können in der Trennfuge zwischen der unteren Formhälfte 5 und dem Formoberteil 9 verlaufen, oder aber in die untere Formhälfte 5 oder das Formoberteil 9 eingearbeitet sein.

Nach Beendigung des Spritzgießens des Formlings 13 wird der Spritzkopf 22 von dem Formwerkzeug weggefahren und das Formoberteil 9 angehoben, wobei der Formling 13 in der unteren Formhälfte 5 verbleibt. Die untere Formhälfte 5 ist auf einem Karusselltisch 24 angeordnet, der um die vertikale Achse 25 drehbar ist. Durch Drehung um 180° wird die untere Formhälfte 5 mit dem darin befindlichen, noch nicht erstarrten Formling 13 in die Stellung 5a gebracht, wo sie sich unter einer oberen Formhälfte 7 befindet und mit dieser zusammen eine Preßform bildet. In dieser Stellung wird auf den Formling 13 eine Deckschicht 19 aus flexiblem Material aufgelegt. Bei dieser Deckschicht kann es sich um ein im Prinzip beliebiges flexibles Material handeln, z.B. Gewebe, Leder oder Kunstleder, Schaumstoff od.dgl., oder eine zwei- oder mehrschichtige Kombination aus solchen Materialien. Man kann die Deckschicht 19, anstatt sie auf den Formling 13 aufzulegen, auch in geeigneter Weise an der Unterseite der oberen Formhälfte 7 befestigen. Durch Absenken der oberen Formhälfte 7 mittels einer Antriebsvorrichtung 23 wird die Deckschicht 19 gegen die Oberseite des nocht nicht erstarrten Formlings 13 gepreßt und mit diesem verbunden, wie in Fig. 1 links dargestellt ist.

Vorzugsweise sind auf dem Karusselltisch 24, wie dargestellt, zwei identische untere Formhälften 5, 5a angeordnet. Jeweils eine dieser unteren Formhälften bildet zusammen mit dem Formoberteil 9 das Spritzgießwerkzeug, während gleichzeitig die andere untere Formhälfte 5a mit der oberen Formhälfte 7 der Preßform zusammenwirkt. Auf diese Weise kann in jedem Arbeitstakt der Maschine sowohl ein Formling 13 durch Spritzgießen geformt und gleichzeitig ein im vorherigen Takt geformter Formling 13 mit der Deckschicht 19 verpreßt werden.

Abweichend von der Ausführungsform nach Fig. 7 können auf dem Karusselltisch 24 auch drei oder mehr untere Formhälften 5 angeordnet sein, die durch Drehen des Karusselltisch 24 um entsprechende Winkel, z.B. 120°, in drei oder mehr verschiedene Positionen gebracht werden können. Zwei dieser Positionen können die in Fig. 7 gezeigten Positionen 5 und 5' unterhalb eines Spritzgieß-Formoberteils 9 und einer oberen Preßformhälfte 7 sein, während eine oder mehrere weitere Positionen weiteren Behandlungsschritten dienen können, z.B. eine Entnahmeposition für das Entnehmen der fertigen Formteile aus der unteren Preßformhälfte 5, eine Warteposition für das Abkühlen der Formteile und dgl.

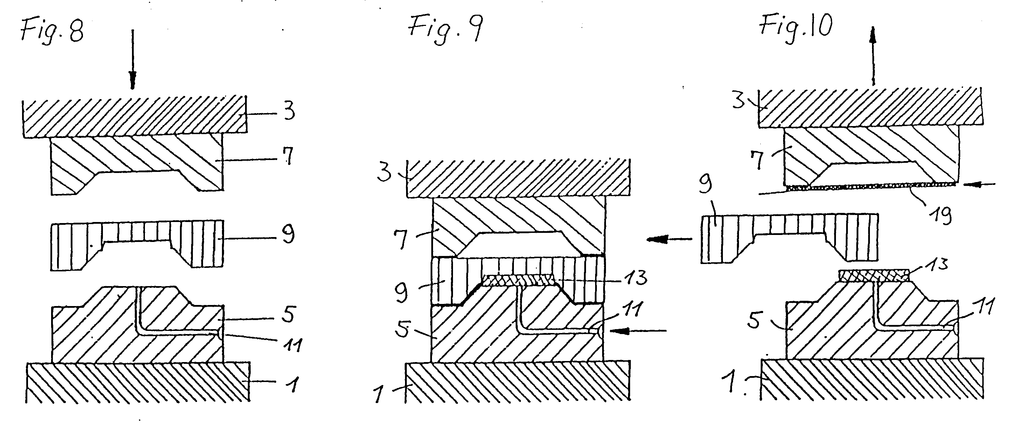

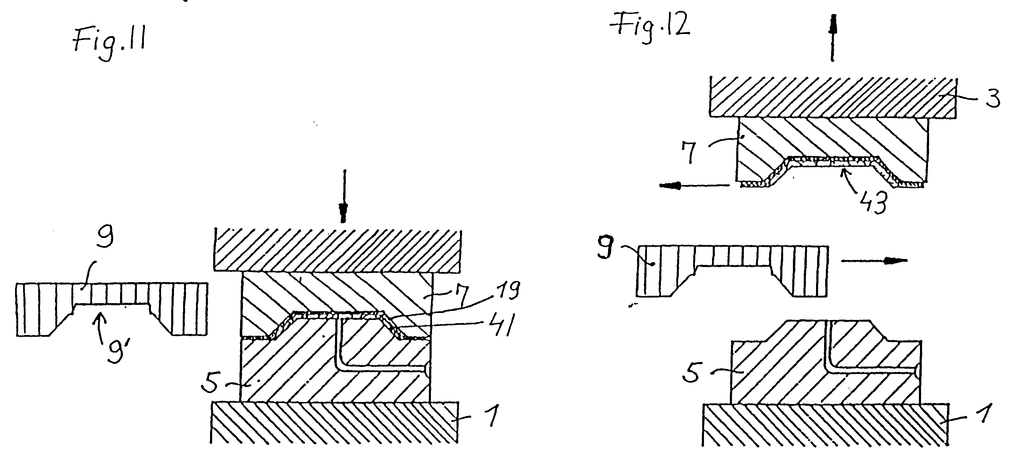

Bei der Ausführungsform nach Fig. 8 bis 13 hat die Vorrichtung eine stationäre untere Aufspannplatte 1 und eine bewegliche obere Aufspannplatte 3, die an Führungen (in Fig. 8 bis 12 nicht dargestellt) vertikal beweglich gelagert ist und mittels eines Antriebs (nicht dargestellt) in eine Öffnungs- oder Schließbewegung relativ zur unteren Aufspannplatte 1 bewegt werden kann. Die untere Aufspannplatte 1 trägt eine erste Formhälfte 5, in der ein oder mehrere Gießkanäle 11 ausgebildet sind, die an eine Spritzgießmaschine (nicht dargestellt) angeschlossen werden können. Die obere Aufspannplatte 3 trägt eine zweite Formhälfte 7. Zwischen die Formhälften 5, 7 kann ein Formoberteil 9 eingeführt werden, welches mit der ersten Formhälfte 5 zusammen eine Spritzgießform bildet.

Ausgehend von der Ausgangsstellung gemäß Fig. 1 wird die zweite Formhälfte 7 mittels der beweglichen Aufspannplatte 3 nach unten bewegt und trifft gegen die Rückseite des Formoberteils 9 und drückt dieses gegen die erste Formhälfte 5, so daß die Stellung gemäß Fig. 2 erreicht wird, in der die erste Formhälfte 5 mit dem Formoberteil 9 eine geschlossene Spritzgießform bildet. Durch Einspritzen von thermoplastischem Kunststoff über die Spritzkanäle 11 ird ein Vorformling 13 hergestellt.

Anschließend wird gemäß Fig. 3 die obere Aufspannplatte 3 mit der zweiten Formhälfte 7 nach oben bewegt, das Formoberteil 9 bewegt sich ebenfalls nach oben und wird dann seitlich zwischen den Formhälften 5, 7 herausbewegt. Der Vorformling 13 verbleibt an der stationären ersten Formhälfte 5. An der zweiten Formhälfte 7 wird eine Deckschicht 19 fixiert, bei der es sich beispielsweise um ein Deckmaterial mit dekorativer Oberflächenstruktur handeln kann und die z.B. als vorgefertigte Bahn von einer Rolle abgezogen ewrden kann. Anschließend werden gemäß Fig. 4 die Formhälften 5, 7 zusammengepreßt, wobei der noch formbare Vorformling 13 zur endgültigen gewünschten Form der Grundschicht 41 des herzustellenden Formteils gepreßt und gleichzeitig mit der Deckschicht 19 verpreßt und verbunden wird. Durch Kühlen der Formhälfte 5 und/oder 7 wird das so hergestellte laminierte Formteil bis unter die Erstarrungstemperatur abgekühlt.

Gemäß Fig. 5 werden dann die Formhälften 5, 7 auseinander bewegt, das z.B. an der beweglichen Formhälfte 7 verbleibende fertige Formteil 43 kann entnommen werden, und das Formoberteil 9 wird zwischen die Formhälften 5, 7 eingefahren, so daß ein neuer Formzyklus aus der Ausgangsstellung gemäß Fig. 1 beginnen kann.

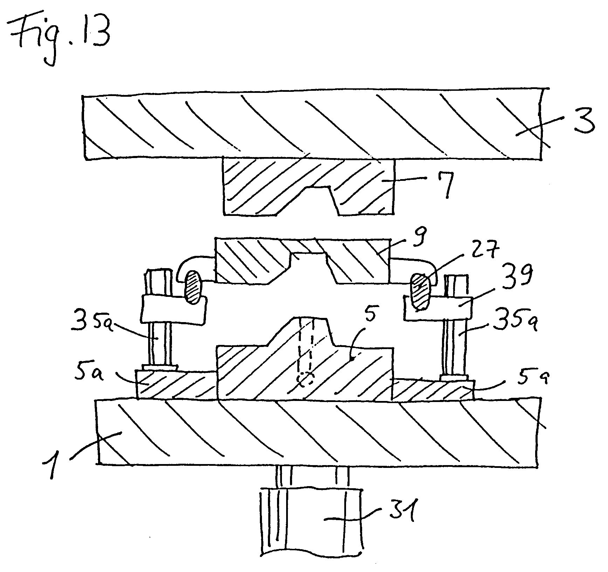

Fig. 13 zeigt in der zu den Fig. 1 bis 5 senkrechten Schnittebene, daß das Formoberteil 9 auf horizontalen Führungsschienen 27 verschiebbar geführt ist, die ihrerseits mittels Lagerkonsolen 39 an den vertikalen Führungsstangen 35 vertikal verschieblich gelagert sind, die mit der stationären unteren Aufspannplatte 1 starr verbunden sind.

Fig. 13 veranschaulicht ferner, daß die Vorrichtung abweichend von Fig. 8 bis 12 auch so ausgestaltet sein kann, daß die obere Aufspannplatte 3 mit der oberen Preßformhälfte 7 feststeht, während die untere Aufspannplatte 1 mit der unüs teren Preßformhälfte 5 mittels eines Druckmittelzylinders 31 vertikal bewegt werden kann.

## Patentansprüche

1. Verfahren zum Herstellen laminierter Formteile, die aus einer Grundschicht aus thermoplastischem Material und mindestens einer Deckschicht aus vorgefertigtem flächigen Deckschichtmaterial bestehen, mittels einer eine untere und obere Preßform (5, 7) aufweisenden Presse, wobei in einem ersten Schritt das plastifizierte thermoplastische Material in die untere Preßform (5) eingebracht wird und dann in einem zweiten Schritt die untere und obere Preßform zusammen mit dem dazwischen eingebrachten Deckschichtmaterial gegeneinander gepreßt und dadurch das thermoplastische Material zur Grundschicht geformt und mit der Deckschicht verbunden wird, dadurch **gekennzeichnet**, daß der erste Schritt als Spritzgießverfahren durchgeführt wird, bei dem die untere Preßform (5) zusammen mit einem Formoberteil (9) eine Spritzgießform bildet, in deren Formhohlraum das thermoplastische Material eingespritzt wird, wobei durch das Spritzgießen ein Formling (13) gebildet wird, der teilweise der Formkontur (5') der unteren Preßform (5) entspricht, aber insbesondere deren äußere Bereiche (5'') nicht vollständing ausfüllt, und daß danach die untere Preßform (5) zusammen mit dem Formling (13) von dem Formoberteil (9) getrennt und für den zweiten Schritt mit der oberen Preßform (7) zusammengebracht wird,
und daß im zweiten Schritt der Formling beim Verpressen mit der Deckschicht (19) unter Erzeugung eines Materialflusses in die Randbereiche der Formkontur zur vollständigen Grundschicht fertiggeformt wird.

2. Verfahren nach Anspruch 1, dadurch **gekennzeichnet**, daß im ersten Schritt ein Formoberteil (9) verwendet wird, das zusammen mit der unteren Prßform (5) einen geschlossenen Formhohlraum definiert, der Randbereiche der Formkontur der unteren Preßform (5) nicht umfaßt, und daß das thermoplastische Material in diesen Formhohlraum bis zu dessen vollständiger Ausfüllung eingespritzt wird.

3. Verfahren nach Anspruch 1 oder 2, dadurch **gekennzeichnet**, daß im ersten Schritt ein Formoberteil (9) verwendet wird, daß eine von der zu bildenden Grundschicht abweichende Formkontur hat, die eine für den Materialfluß im zweiten Schritt günstige Massenverteilung (13') des Formlings vorgibt.

4. Verfahren nach einem der Ansprüche 1 bis 3, dadurch **gekennzeichnet**, daß Mittel zum vollständigen Ablösen des Formoberteils von der Oberseite des noch nicht vollständig erstarrten Formlings angewendet werden.

5. Verfahren nach einem der Ansprüche 1 bis 4, dadurch **gekennzeichnet**, daß gleichzeitig mit dem ersten Schritt ein Tiefziehen der Deckschicht (9) in der oberen Preßform (7) erfolgt.

6. Vorrichtung zum Herstellen laminierter Formteile aus einer Grundschicht aus thermoplastischem Material und mindestens einer Deckschicht, gemäß dem Verfahren nach einem der Ansprüche 1 bis 5,
mit einer Preßvorrichtung mit unterer und oberer Preßform (5, 7) sowie Mitteln zum Einbringen von thermoplastischem Kunststoff in die untere Preßform, zum Einbringen eines vorgefertigten Deckschichtmaterials (19) in die obere oder untere Preßform (5, 7) oder dazwischen, und zum Zusammenpressen der Preßformen,
dadurch **gekennzeichnet**, daß die Vorrichtung ferner ein Formoberteil (9) aufweist, das wahlweise mit der unteren Preßform (5) zur Bildung einer Spritzgießform zusammenführbar ist,
daß die aus Formoberteil (9) und unterer Preßform (5) gebildete Spritzgießform an ein Spritzaggregat anschließbare Zuführkanäle (11) zum Einspritzen von thermoplastischem Material in die Spritzgießform aufweist,
und daß das Formoberteil (9) eine Formkontur aufweist, die zusammen mit der unteren Preßform (5) einen Formhohlraum definiert, der Randbereiche (5'') der Formkontur der unteren Preßform (5) mindestens teilweise nicht umfaßt.

7. Vorrichtung nach Anspruch 6, dadurch **gekennzeichnet**, daß das Formoberteil (9) eine Formkontur hat, die eine von der Endform der Grundschicht des herzustellenden Formteils abweichende Dickenverteilung (13') des Formhohlraums vorgibt.

8. Vorrichtung nach Anspruch 6 oder 7, dadurch **gekennzeichnet**, daß zwei oder mehrere untere Preßformen (5, 5a) einem bewegbaren Träger, insbesondere einem drehbaren Karusselltisch, angeordnet sind, der zwischen zwei oder mehreren Stellungen bewegbar ist, in denen eine untere Preßform mit dem Formoberteil der Spritzgießform und gleichzeitig eine andere untere Preßform mit der oberen Preßform zusammenwirkt, bzw. umgekehrt.

9. Vorrichtung nach Anspruch 6 oder 7, dadurch **gekennzeichnet**, daß das Formoberteil (9) und die obere Preßform (7) auf einem beweglichen, insbesondere drehbaren oder verschiebbaren Träger (4) angeordnet sind, der zwischen mindestens zwei Stellungen (4, 4') bewegbar ist, in denen abwechselnd das Formoberteil (9) oder die obere Preßform (7) der unteren Preßform (5) gegenübersteht.

10. Vorrichtung nach Anspruch 6 oder 7, dadurch **gekennzeichnet**, daß das Formoberteil (9) zwischen die geöffnete untere und obere Preßform (5, 7) einfahrbar und mittels der obren Preßform (7) gegen die untere Preßform (5) anpreßbar ist.

11. Vorrichtung nach Anspruch 10, dadurch **gekennzeichnet**, daß das Formoberteil (9) an seiner der oberen Preßform zugewandten Seite zusammen mit der oberen Preßform eine geschlossene Tiefziehform bildet.

12. Vorrichtung nach einem der Ansprüche 6 bis 11, dadurch **gekennzeichnet**, daß die obere Preßform (7) für das Tiefziehen der Deckschicht mit Vakuumöffnungen versehen oder Porös ausgebildet ist.

13. Vorrichtung nach Anspruch 11, dadurch **gekennzeichnet**, daß in dem Formoberteil (9) Kanäle zum Beaufschlagen der Deckschicht mit ienem Druckmedium für das Tiefziehen in die obere Preßform vorgesehen sind.
